Europäisches Patentamt

European Patent Office

Office européen des brevets

(11) Publication number: **0 031 227**
**A1**

## (12) EUROPEAN PATENT APPLICATION

(21) Application number: **80304499.9**

(22) Date of filing: **12.12.80**

(51) Int. Cl.³: **A 01 K 11/00**

(30) Priority: **12.12.79 GB 7942805**

(43) Date of publication of application:
**01.07.81 Bulletin 81/26**

(84) Designated Contracting States:
**DE FR GB NL**

(71) Applicant: **Caisley, Roy**
**Am Kreuzberg 14**
**D-4294 Isselburg-Vehlingen(DE)**

(71) Applicant: **Nehls, Reinhard Erwin**
**Siedlerstrasse 5**
**D-4290 Bocholt(DE)**

(71) Applicant: **Jacobs, Gerardus Vincentius Maria**
**Jacob Catsstraat 15**
**Lichtenvoorde(NL)**

(72) Inventor: **Caisley, Roy**
**Am Kreuzberg 14**
**D-4294 Isselburg-Vehlingen(DE)**

(74) Representative: **Brooks, Nigel Samuel et al,**
**c/o Stevens Hewlett & Perkins 5 Quality Court Chancery Lane**
**London WC2A 1HZ(GB)**

(54) An ear identification tag.

(57) An ear identification tag has a rigid ear piercing pin (2) having a pointed head end (3) a shank (8) and a heel (5). A first flexible button (13) is secured on the heel (5) for anchoring the tag at one side of an ear (4). A second flexible button or identification plate (16) is securable to the pointed head end (3) for anchoring the tag at the other side of the ear.

FIG.1

EP 0 031 227 A1

## "AN EAR INDENTIFICATION TAG"

The present invention relates to an indentification tag for fitting to an ear of an animal.

According to the invention there is provided an ear indentification tag comprising a rigid ear piercing pin having a pointed head end, a shank and a heel end; one flexible button secured to the heel of the pin for anchoring the tag at one side of the ear; and a second flexible button securable to the pointed head end of the pin for anchoring the tag on the other side of the ear.

It is envisaged that the pin may be of metal, but it is preferred that the pin be of plastics material having sufficient rigidity that it can pierce an ear without requiring reinforcement - against bending - by a tag insertion tool. By contrast the two buttons are preferably of flexible plastics material. It is convenient for the buttons to have sufficient flexibility that they may flex and not jam when snagged by the animal in fencing.

Whilst either flexible button may be an indentification plate, it is preferred that the second flexible button be the indentification plate. Preferably the indentification plate and the pin are adapted to co-operate a) in preventing the plate from turning on the pin, and b) in preventing the plate from moving axially on the pin. To ensure correct rotary alignment of the pin and plate prior to fitting they may both be provided with means for rotarily locating them in a tag insertion tool. A further preferred feature of the indentification plate is provision thereon of means for protecting the head end of the pin against being worn away by rubbing by the animal against brickwork, for example.

The first button and the pin are secured

- 2 -

to prevent the first button from moving axially on the pin. Whilst this securement and the corresponding securement in respect of the second button preferably take the form of grooves around the pin into which the buttons fit, the securements could take the form of overhung recesses in the buttons for accommodating the heel and head of the pin.

To help understanding of the invention a specific embodiment thereof will now be described with reference to the accompanying drawing in which:-

Figure 1 is an exploded side elevation of the tag of the invention;

Figure 2 is a view of the indentification plate of Figure 1 taken in the direction of the arrow I in Figure 1; and

Figure 3 is a side elevation of the tag when assembled.

The tag 1 shown in the drawing includes a rigid pin 2 of hard nylon plastics material. A head 3, which is pointed for piercing an ear 4, is provided at one end of the pin, whilst a heel 5 in the form of a disc is provided at the other end of the pin. Immediately adjacent the head 3 and the heel 5, grooves 6, 7 are provided in a shank 8 interconnecting the head and the heel. As shown the head 3 and heel 5 nave a larger diameter than the shank 8, though this need not be so. At the underside 9 of the head, a number of equally circumferentially spaced teeth 10 are provided. The pin also has an axial bore 11 and a nick 12 at the heel for correct location of the pin in a tag insertion tool. A spigot on the tool engages in bore 11 during insertion to enhance alignment of the pin in comparison with alignment which can be achieved from the comparatively narrow heel.

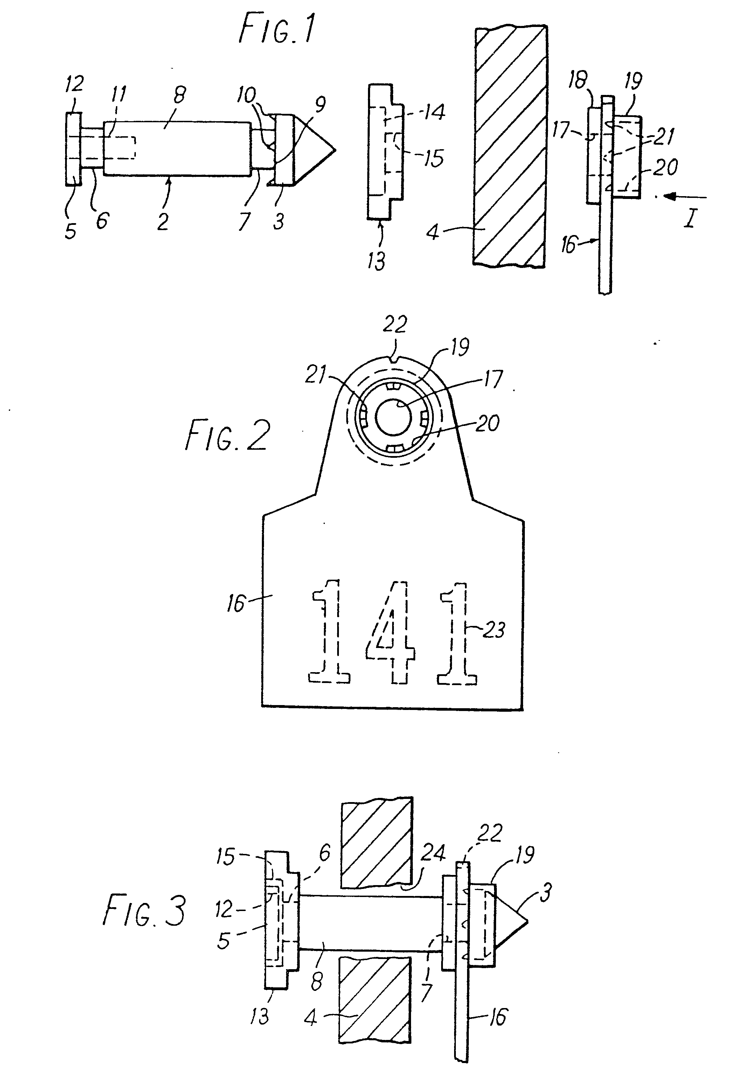

A first or heel button 13, which is fitted to the pin prior to insertion of the pin in an ear 4, is shown in Figure 1 adjacent the head 3 of the pin. The heel button is a disc of flexible polyurethane plastics material and has a recess 14 for the heel 5 of the pin and a bore 15 for accommodating the reduced diameter portion of the shank 8 of the pin at the groove 6. The bore 15 is of slightly smaller diameter than the reduced diameter portion, to provide a tight fit of the heel button on the pin in the position shown in Figure 3.

A second button or indentification plate 16, also of flexible polyurethane plastics material is shown in Figure 1 on the opposite side of the ear from the pin. The plate 16 has a bore 17, similar to bore 15 in the first button in being slightly smaller in diameter than the reduced diameter portion of the shank at groove 7. On the ear side of the plate 15, a boss 18 is provided around the bore 17. On the other side of the plate a further boss 19 is provided, this boss having a hollow 20 to accommodate the head 3 of the pin. The bottom of the hollow 20 has a number of notches 21 corresponding to the teeth 10. Also provided in the plate is a nick 22, for correct angular location of the plate in the insertion tool, the nick being opposite the main portion of the plate 17 on which indentification indicia 23 are provided.

Figure 3 shows the tag assembled and inserted in the ear. The first button is retained by the groove 6 at the heel end of the pin with the heel 5 in the recess 15. This protects the heel from possible abrasion. The shank passes through a hole 24 made by the head 3 in the ear during insertion. The indentification plate is retained against axial movement by engagement of the boss 18 in the groove 7 at the head 3. Due to the angular location provided by the nicks 12, 22 the teeth 10 were already aligned with the notches 21 when the head was thrust through the bore 18 on insertion. Thus the teeth 10 engage in the notches and prevent rotation of the plate on the pin. This is desirable to prevent frictional wear occurring between the indentification plate 16 and the pin 2. Such wear could result in the weakness and ultimately detachment of the indentification plate from the pin.

The head 3 is, at least partially, contained in the boss 19 and thereby protected. The two buttons provide an appreciable area for anchoring the tag against pulling through the hole 24, whilst being sufficiently flexible to minimize the risk of jamming when snagged. Should temporary jamming occur, the teeth 10 by engagement in the notches 21, help to maintain the shape of the bore 17 in the flexible plate 16. In consequence there is less chance of the pin pulling out of the bore 17 before the tag becomes unjammed.

The invention is not intended to be restricted to the details of the above described tag. For instance, it is possible for the first or heel button to be extended in size and shape to allow for duplication of the identification information or for extra information to be displayed by the tag, e.g. the name and address of the owner of the animal, in addition to the animal's number on the identification plate 16. Further for different circumstances different sizes and shapes of buttons may be used with a common size and shape of rigid pin.

CLAIMS

1.     An ear identification tag  comprising a rigid ear piercing pin having a pointed head end, a shank and a heel;  one flexible button secured to the heel of the pin for anchoring the tag at one side of the ear; and a second flexible button securable to the pointed head end of the pin for anchoring the tag at the other side of the ear.

2.     An ear identification tag as claimed in Claim 1 wherein the pin is of rigid plastics material and the two buttons are of flexible plastics material.

3.     An ear identification tag as claimed in Claim 1 or Claim 2 wherein the second flexible button is an identification plate which is adapted to co-operate with the pin to prevent the plate turning on the pin and to prevent the plate from moving axially along the pin.

4.     An ear identification tag as claimed in Claim 3 wherein the identification plate is prevented from moving axially along the pin by a groove around the pin into which the plate engages at a bore in the plate or by an over-hung recess in the plate into which the head end of the pin engages and the first button is secured to the heel of the pin by a groove around the pin into which the first button engages at a bore in the first button or by an over-hung recess in the first button into which the heel of the pin engages.

5.     An ear identification tag as claimed in Claim 3 or Claim 4 wherein the identification plate is prevented from turning on the pin by teeth provided on the head of the pin and engaging in notches provided in the identification plate.

6. An ear identification tag as claimed in Claim 3, Claim 4 or Claim 5 wherein the pin and the identification plate are provided with means for rotarily locating them in a tag insertion tool.

7. An ear identification tag as claimed in Claim 6, wherein the means for rotary location is a notch in the pin and a notch in the identification plate.

8. An ear identification tag as claimed in any preceeding claim wherein means is provided for protecting the heel and/or the head end of the pin from abrasion.

9. An ear identification tag as claimed in Claim 8 wherein the heel of the pin is protected by being acommodated in a recess in the first button.

10. An ear identification tag as claimed in Claim 8, wherein the head end of the pin is protected by being accommodated at least partially, in a boss on the second button or identification plate.

0031227

## Fig.1

## Fig.2

## Fig.3

| | European Patent Office | EUROPEAN SEARCH REPORT | Application number |
|---|---|---|---|
| | | | EP 80 30 4499.9 |

| DOCUMENTS CONSIDERED TO·BE RELEVANT | | | CLASSIFICATION OF THE APPLICATION (Int. Cl ³) |
|---|---|---|---|
| Category | Citation of document with indication, where appropriate, of relevant passages | Relevant to claim | |
| | GB - A - 1 293 157 (DELTA PLASTICS LTD.) <br> * page 1, line 76 to page 2, line 41; fig. 3 to 9 * <br> -- | 1-4, 10 | A 01 K 11/00 |
| | US - A - 3 731 414 (B.E. MURPHY et al.) <br> * abstract; fig. 1 * <br> -- | 1,2, 10 | |
| | GB - A - 983 219 (H.P. SCHOFIELD) <br> * page 3, lines 24 to 93; fig.1, 2, 6 * <br> -- | 1,3,4 | |
| | DE - A1 - 2 830 401 (G. YVORRA) <br> * fig. 1 to 3 * <br> -- | 1,2 | TECHNICAL FIELDS SEARCHED (Int. Cl ³) |
| | GB - A - 1 372 769 (UNIVERSAL TAG CO.) <br> * page 3, lines 102 to 105; fig. 1 to 5 * <br> ---- | 1,6 | A 01 K 11/00 <br> A 01 K 35/00 <br> G 09 F 3/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search <br> Berlin | Date of completion of the search <br> 19-02-1981 | Examiner <br> SCHOFER | |

EPO Form 1503.1 06.78